# EUROPEAN PATENT SPECIFICATION

(11) **EP 3 025 085 B1**
(45) Date of publication and mention of the grant of the patent: **19.07.2017**
(21) Application number: 14750881.6
(22) Date of filing: 25.07.2014
(51) Int. Cl.: F16L 57/00, B60R 16/02, H02G 3/04, H02G 15/18

(54) **REINFORCED WRAPPABLE PROTECTIVE TEXTILE SLEEVE AND METHOD OF CONSTRUCTION THEREOF**
VERSTÄRKTE WICKELBARE TEXTILSCHUTZHÜLLE UND VERFAHREN ZUR HERSTELLUNG DAVON
MANCHON TEXTILE PROTECTEUR ENVELOPPANT RENFORCÉ, ET PROCÉDÉ DE CONSTRUCTION ASSOCIÉ

(30) Priority: 25.07.2013 US 201361858527 P
(43) Date of publication of application: 01.06.2016
(73) Proprietor: Federal-Mogul Powertrain, Inc., Southfield, MI 48033 (US)
(72) Inventor: TEA, Jimmy, E., Mohnton, PA 19540 (US)
(74) Representative: HGF Limited
(86) International application number: PCT/US2014/048115
(87) International publication number: WO 2015/013571

(56) References cited:
- WO-A1-03/060373
- WO-A1-2008/128022
- WO-A1-2008/131467
- US-A1- 2007 166 495
- US-A1- 2011 275 268

## Description

### BACKGROUND OF THE INVENTION

### 1. Technical Field

This invention relates generally to protective sleeves for providing protection to elongate members contained therein, and more particularly to wrappable protective sleeves and to their method of construction.

### 2. Related Art

Wrappable protective sleeves for providing protection to elongate members contained therein are known. Typically, the wrappable protective sleeves are formed having a wrappable wall constructed with a uniform material density over the entire wall, wherein opposite lengthwise extending edges of the wall are wrappable into overlapping relation with one another. The wall can be constructed as a heat-set wall, thereby biasing the wall into its wrapped configuration, or the wall can be manually wrapped and fixed via a separate fastener, e.g. tie wrap or tape.

Although sleeves formed from the aforementioned walls can prove useful, they can suffer drawbacks due to the physical properties of the wall. For example, it is known that wrappable sleeve walls can collapse under a radial load and/or kink while being bent around circuitous paths. Attempts to combat collapsing and kinking include providing the wall with an increased thickness, however, this adds weight to the resulting sleeve, which can be as or more problematic than the original problem of collapsing and/or kinking. Further attempts to combat collapsing and kinking include fastening preformed rigid hoops or other preformed rigid structural materials to an inner surface of the wall, however, this typically comes at a great expense, both from having to use separate material from the wall to form the preformed rigid structures and further, in having to incorporate additional manufacturing processes to fasten the preformed rigid structure(s) to the sleeve wall. US 2011/275268, US 2007/166495 & WO 03/060373 all describe a wrappable sleeve for protecting elongate members incorporating ribs.

### SUMMARY OF THE INVENTION

In accordance with one aspect of the invention, there is provided a method of constructing a wrappable protective sleeve for providing protection to an elongate member contained therein, as defined in the appended claims. A sleeve obtained from the method is also provided, as defined in the appended claims. The sleeve includes a textile wall having opposite edges extending lengthwise along a longitudinal axis between opposite ends. The edges are wrappable to overlap one another to form an enclosed cavity. At least one reinforcement rib extends along at least a portion of the wall. The at least one reinforcement rib is formed of material fused and bonded on the wall.

In accordance with another aspect of the invention, the wall is constructed of a first type of material and the at least one reinforcement rib is formed of a second type of material, wherein the first and second types of material can be different from one another, thereby providing specific material physical properties for the wall and the reinforcement rib, as needed for the intended application.

In accordance with another aspect of the invention, the wall is constructed of a first type of material and the at least one reinforcement rib is formed of a second type of material, wherein the first and second types of material can be the same.

In accordance with another aspect of the invention, the at least one reinforcement rib can be formed from fused material of the wall, thereby being economical in manufacture and formed integrally within and on the wall.

In accordance with another aspect of the invention, the at least one reinforcement rib can be formed as a plurality of discrete reinforcement ribs, thereby being able to provide regions of discrete, localized material physical properties.

In accordance with another aspect of the invention, the plurality of discrete reinforcement ribs can extend substantially transversely to the longitudinal axis, thereby providing regions of enhanced hoops strength spaced from one another by intermediate regions having enhanced longitudinal flexibility.

In accordance with another aspect of the invention, the at least one reinforcement rib can be heat-set to bias opposite edges into their overlapping relation with one another.

In accordance with another aspect of the invention, the at least one reinforcement rib can be formed as a single, continuous reinforcement rib.

In accordance with another aspect of the invention, the single, continuous reinforcement rib can extend over a serpentine path between the opposite ends of the sleeve, thereby being able to provide different flexural properties over different regions along the length of the sleeve, as desired.

In accordance with another aspect of the invention, the single, continuous reinforcement rib can have a plurality of widthwise extending portions extending substantially transversely to the longitudinal axis, wherein the widthwise extending portions are interconnected to one another by lengthwise extending portions extending substantially parallel to said longitudinal axis, thereby allowing the reinforcement rib to be formed quickly as a continuous rib, and providing enhanced hoop strength via the widthwise extending portions and flexural rigidity and strength via the lengthwise extending portions, wherein each of the portions of the reinforcement rib can be heat-set.

In accordance with another aspect of the invention, the at least one reinforcement rib is asymmetrical, thereby allowing different regions of the sleeve wall to exhibit different physical properties, as desired for the specific region.

In accordance with another aspect of the invention, the textile wall can be formed as a nonwoven material.

In accordance with another aspect of the invention, the textile wall can be one of a woven, knit or braided material.

In accordance with another aspect of the invention, the at least one reinforcement rib can be fused from heat-settable material to facilitate heat-setting the wall into a self-curled configuration to bring the opposite side into overlapping relation with one another.

In accordance with another aspect of the invention, the at least one reinforcement rib can form a plurality of axially spaced first regions having a first density and a plurality of axially spaced second regions having a second density greater than the first density, wherein the first regions and the second regions alternate with one another along the longitudinal axis to provide separate zones of increased hope strength and increased flexibility.

The method includes forming a textile wall having opposite edges extending lengthwise along a longitudinal axis between opposite ends with the opposite edges being wrappable to overlap one another to form an enclosed cavity. The method further includes melting and solidifying at least one reinforcement rib on the wall to form regions of increased hoop strength and rigidity as compared to regions of the wall devoid of the reinforcement rib.

In accordance with another aspect of the invention, the method further includes forming the wall from a first type of material and fusing the at least one reinforcement rib from a second type of material, wherein the first and second types of material can be different from one another.

In accordance with another aspect of the invention, the method can further include forming the wall from a first type of material and fusing the at least one reinforcement rib from a second type of material, wherein the first and second types of material can be the same.

In accordance with another aspect of the invention, the method can further include fusing the at one reinforcement rib in material of the wall.

In accordance with another aspect of the invention, the method can further include fusing the at least one reinforcement rib as a plurality of discrete reinforcement ribs.

In accordance with another aspect of the invention, the method can further include fusing a plurality of discrete reinforcement ribs extending substantially transversely to the longitudinal axis.

In accordance with another aspect of the invention, the method can further include fusing the at least one reinforcement rib as a single reinforcement rib.

In accordance with another aspect of the invention, the method can further include fusing the reinforcement rib extending over a serpentine path between the opposite ends.

In accordance with another aspect of the invention, the method can further include fusing a single, continuous reinforcement rib having a plurality of widthwise extending portions extending substantially transversely to the longitudinal axis and interconnecting the widthwise extending portions to one another by portions of the reinforcement rib extending substantially parallel to the longitudinal axis.

In accordance with another aspect of the invention, the method can further include fusing the at least one reinforcement rib being asymmetrical.

In accordance with another aspect of the invention, the method can further include forming the wall as a nonwoven material.

In accordance with another aspect of the invention, the method can further include forming the wall as one of a woven, knit or braided material.

In accordance with another aspect of the invention, the method can further include fusing the at least one reinforcement rib from heat-settable material.

### BRIEF DESCRIPTION OF THE DRAWINGS

These and other aspects, features and advantages of the present invention will become more readily appreciated when considered in connection with the following detailed description of presently preferred embodiments and best mode, appended claims and accompanying drawings, in which:
Figure 1 is a schematic perspective view of a wrappable textile sleeve constructed in accordance with one aspect of the invention wrapped about an elongate member to be protected;
Figure 2 is a plan view of the sleeve of Figure 2 shown in an unwrapped configuration;
Figure 3 is a plan view of a sleeve constructed in accordance with yet another aspect of the invention shown in an unwrapped configuration;
Figure 4 is a plan view of a sleeve constructed in accordance with yet another aspect of the invention shown in an unwrapped configuration;
Figure 5 is a plan view of a sleeve constructed in accordance with yet another aspect of the invention shown in an unwrapped configuration; and
Figure 6 is a plan view of a sleeve constructed in accordance with yet another aspect of the invention shown in an unwrapped configuration.

### DETAILED DESCRIPTION OF PRESENTLY PREFERRED EMBODIMENTS

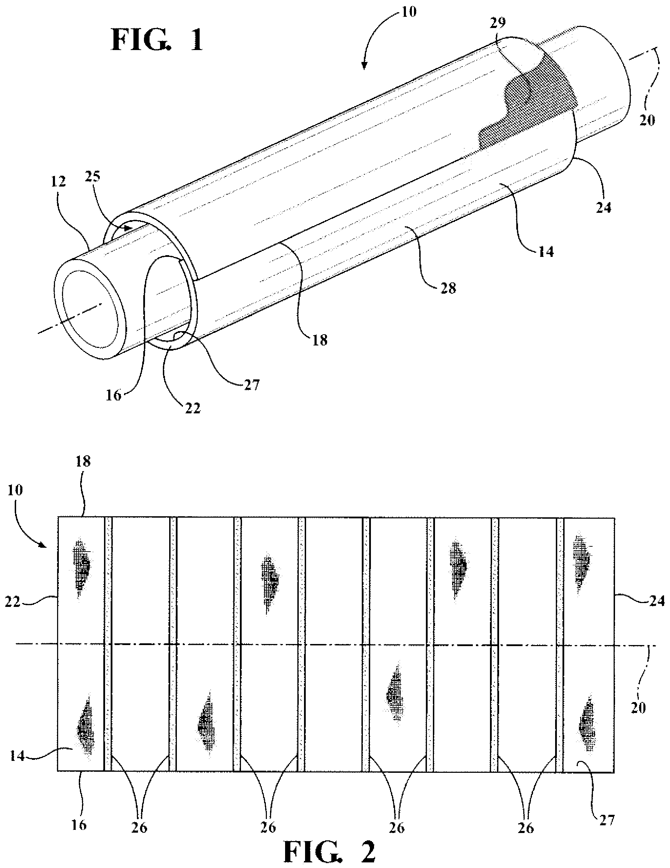

Referring in more detail to the drawings, Figure 1 illustrates a wrappable textile sleeve, referred to hereafter simply as sleeve 10, shown wrapped about an elongate member 12 to be protected, such as, by way of example and without limitation, a wire, a wire harness, a tube or pipe. The sleeve 10 is constructed to provide enhanced protection against being radially crushed, thereby providing enhanced protection to the elongate member 12 against being crushed, while also having an enhanced flexibility and ability to resist kinking upon being routed about a serpentine path or corners, thereby allowing the elongate member to be routed over meandering paths. The sleeve 10, in addition to providing enhanced performance characteristics, is economical in manufacture, both from a material content and material processing standpoint. Further, as a result of the manufacturing economies, the structural attributes of the sleeve 10 that provide the enhanced protection against being crushed and against being kinked are highly customizable such that specific performance attributes desired for the intended sleeve application, i.e. regions of enhanced hoop strength and regions of enhanced flexibility, can be readily incorporated into the sleeve 10 in precise regions without incurring undue material or processing expense.

The sleeve 10 includes a textile wall 14 made from a first material having opposite edges 16, 18 extending lengthwise along a longitudinal axis 20 between opposite ends 22, 24. The edges 16, 18 are wrappable about the longitudinal axis 20 to bring the edges 16, 18 into overlapped relation with one another to form a circumferentially enclosed cavity 25. At least one reinforcement rib 26 (Figure 2) made from a second material extends along at least a portion of the wall 14 to provide the aforementioned enhanced protection attributes to the wall 14 against being crushed and kinked. The at least one reinforcement rib 26 is formed of material fused, i.e. melted, bonded and solidified, on and/or in the wall 14.

The wall 14 can be constructed as a nonwoven, woven, knit, or braided wall. As shown in Figure 1, additional layers can be bonded or otherwise attached to either an inner surface 27 or outer surface 29 of the wall 14, such as an outermost scrim or reflective layer 28, e.g. foil layer, bonded to the outer surface 29. The material used to form the wall 14 can be provided having the physical characteristics desired, such as being resistant to abrasion, heat, toxic chemicals, and noise suppressing or otherwise. As such, various materials can be used to construct the wall 14, whether it is formed as a nonwoven material or of interlaced yarn. For example, if formed as a nonwoven material, materials such as recycled cardboard, PET, low melt fibers, including either monofilaments and/or bi-component fibers, standard thermoplastic fibers, basalt, or otherwise, can be used to form the nonwoven wall. If bicomponent fibers are used, they can be provided having a core of a standard thermoplastic material, such as polyethylene terephthalate (PET), for example, with an outer sheath of polypropylene, polyethylene, or low melt polyester, for example. The standard thermoplastic fibers can be provided as any thermoplastic fiber, such as nylon or PET, for example. If the wall 14 is formed of interlaced yarn, the yarn(s) used can be provided as monofilament(s) and/or multifilament(s) of any suitable diameter/Tex and material, including fire resistant and/or fire retardant (FR) yarns. If high temperature ratings are desired along with FR capabilities, then some presently preferred yarn materials include m-Aramid (Nomex, Conex, Kermel), p-aramid (Kevlar, Twaron, Technora), PEI (Ultem), basalt, PPS, and PEEK, for example, otherwise, any suitable polymeric monofilament and/or multifilament yarn can be used, including PET, PP, for example.

The reinforcement rib 26 can be fused from a second material separate from the first material of the wall 14, or it can be fused from a second material that is the same as the first material of the wall 14, such as by being fused on and/or in the wall 14 by fusing the first material of the wall 14 itself. Further, the reinforcement rib 26 can be formed having any desired geometric configuration/pattern, including being a symmetrical or asymmetrical pattern along the length of the wall 14. As such, depending on the application and the physical properties desired for the sleeve 14, with attention being placed on both rigidity in the form of hoop strength and lengthwise flexibility, the reinforcement rib 26 can be highly and readily customized in size, shape and form to provide the desired hoop strength and flexibility along the length of the wall 14. Accordingly, it should be recognized that discrete portions or segments of the wall 14 can be formed having different physical properties from one another, such as differing from one another in hoop strength and flexibility, by forming an increased presence of the reinforcement rib 26 within certain regions to enhance the hoop strength, while forming other regions having a decreased or no presence of the reinforcement rib 26 to enhance the flexibility. Accordingly, the geometric configuration of the reinforcement rib 26 can be altered from one region to another to provide the strength and flexibility desired.

As shown in Figure 2, the reinforcement rib 26 can be formed as a plurality of discrete reinforcement ribs 26. The individual ribs 26 can be formed to extend along any direction, and are shown as extending transversely or substantially transversely to the longitudinal axis 20 in axially spaced relation from one another. The spacing between adjacent reinforcement ribs 26 can be uniform (the same between each pair of adjacent reinforcement ribs) or non-uniform (dissimilar between separate pairs of adjacent reinforcement ribs), depending on the locations in which the enhanced hoop strength and enhanced flexibility are desired. Further, the reinforcement ribs 26 can be formed of any desired heat-fusible material, including a material that is the same as that used to construct the wall 14, or different. By way of example and without limitation, if the wall 14 is constructed of a non-heat-settable material, whether being formed as an interlaced wall of yarn or as a nonwoven material, the reinforcement ribs 26 can be fused onto the wall 14 from a heat-settable material, thereby providing the ability to heat-set the ribs 26 after fusing the ribs 26 on the wall 14, wherein the heat-set ribs 26 act to bias the wall 14 into a self-curling configuration. Accordingly, although the material of the wall 14 can be formed of a non-heat-settable material, the wall 14 can still be heat-set into a self-wrapping configuration via the fused, heat-set ribs 26. Otherwise, if the wall 14 is to remain as a non-self-curling wall, the ribs 26 can be formed of any suitable heat-fusible polymeric material, resin or epoxy to achieve the hoop strength and flexibility desired.

In accordance with a method of constructing the sleeve 10, the reinforcement ribs 26 can be fused on and/or in the wall 14, shown as being fused on the inner surface 27 of the wall 14. The material selected to be fused on the wall 14 is applied via a fusing process, which includes any suitable melting process, via any desired additive manufacturing process capable of fusing/melting one material onto another or fusing/melting a portion of the wall 14 itself, should the wall 14 be formed from a heat-fusible material. By way of example, fusing/melting processes suitable for fusing/melting reinforcement ribs 26 in accordance with the invention include fused deposition modeling (FDM), an extrusion dispensing tip, screen printing, or the like. Further, the heat-fusible material used to form the reinforcement ribs 26 can be UV curable, if desired. As such, the wall 14, whether constructed as a nonwoven material or from interlaced from yearn, is constructed first, and then the reinforcement ribs 26 are fused onto material of the wall 14 or from material of the wall 14 thereafter in the desired pattern.

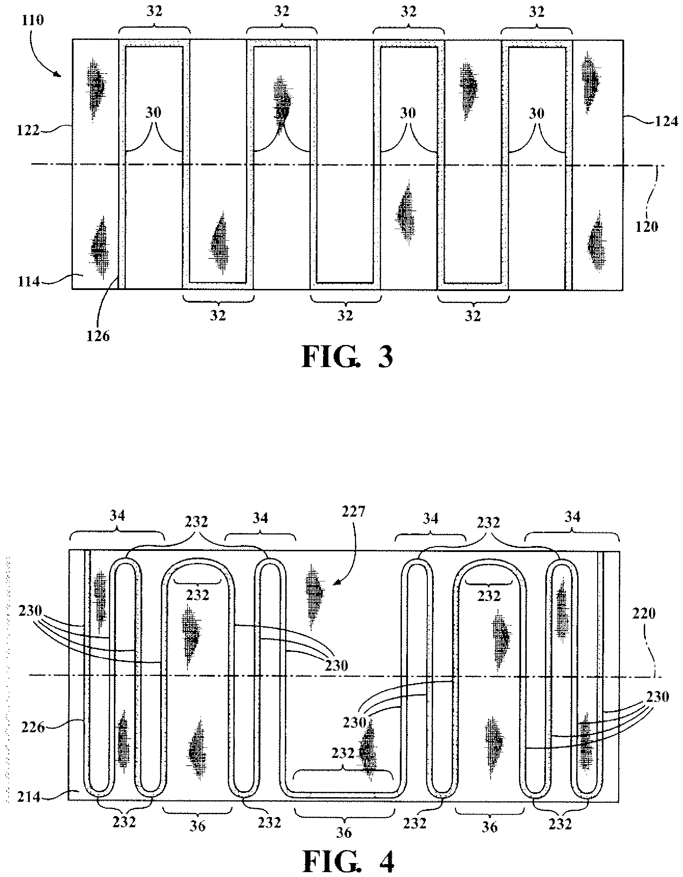

In Figure 3, a sleeve 110 having a sleeve wall 114 constructed in accordance with another aspect of the invention is shown, wherein the wall 114 is similar to the wall 14, however, rather than fusing a plurality of separate, discrete reinforcement ribs on the wall 114, a single reinforcement rib 126 is fused onto the wall 114 or within the material of the wall 114. As such, the fusing process is continuous over the length of the wall 114 without having to interrupt the rib forming process. The reinforcement rib 126 shown extends over a serpentine path between the opposite ends 122, 124. The reinforcement rib 126 has a plurality of widthwise extending portions 30 extending transversely or substantially transversely to the longitudinal axis 120, wherein the adjacent widthwise extending portions 30 are interconnected to one another by lengthwise extending portions 32 extending parallel or substantially parallel to the longitudinal axis 120. The widthwise extending portions 30 act primarily to provide enhanced crush or hoop strength, while the lengthwise extending portions 32 act primarily to provide enhanced flexural strength and rigidity, thereby inhibiting the wall 114 from sagging over unsupported lengths. Accordingly, it should be recognized that the sleeve 10 of Figure 2 and the sleeve 110 of Figure 3 generally have different flexural strengths, with the sleeve 10 being generally more flexible and having less flexural, lengthwise rigidity as compared to the sleeve 110. Although, it is to be understood that the regions of the wall 114 void of the reinforcement rib 126 provide the wall 114 with enhanced flexibility, though having enhanced flexural rigidity as compared to a similar wall being devoid of such lengthwise extending portions. It should be recognized that any serpentine configuration of the reinforcement rib 126 can be formed as desired.

In Figure 4, a sleeve 210 having a sleeve wall 214 constructed in accordance with another embodiment of the invention is shown, wherein the wall 214 is similar to the wall 114, however, rather than fusing a reinforcement rib having a symmetrical configuration along an inner surface 227 of the wall 214, a reinforcement rib 226 is fused having an asymmetrical configuration lengthwise along the wall 214. As such, the reinforcement rib 226 forms at least one, and shown as a plurality of increased density regions 34 of the reinforcement rib 226 along discrete lengthwise extending sections of the wall 214 and at least one, and shown as a plurality of decreased density regions 36 of the reinforcement rib 226 along discrete lengthwise extending sections of the wall 214. As discussed above for the reinforcement rib 126, the reinforcement rib 226 has a plurality of widthwise extending portions 230 extending transversely or substantially transversely to the longitudinal axis 220, wherein the adjacent widthwise extending portions 230 are interconnected to one another by a lengthwise extending portions 232 extending parallel or substantially parallel to the longitudinal axis 220. The widthwise extending portions 230 act primarily to provide enhanced crush or hoop strength, while the lengthwise extending portions 232 act primarily to provide enhanced flexural strength, thereby inhibiting the wall 214 from sagging over unsupported lengths. The increased density regions 34 provide enhanced crush strength to the wall 214, while the decreased density regions 36 provide enhanced flexibility to the wall 214.

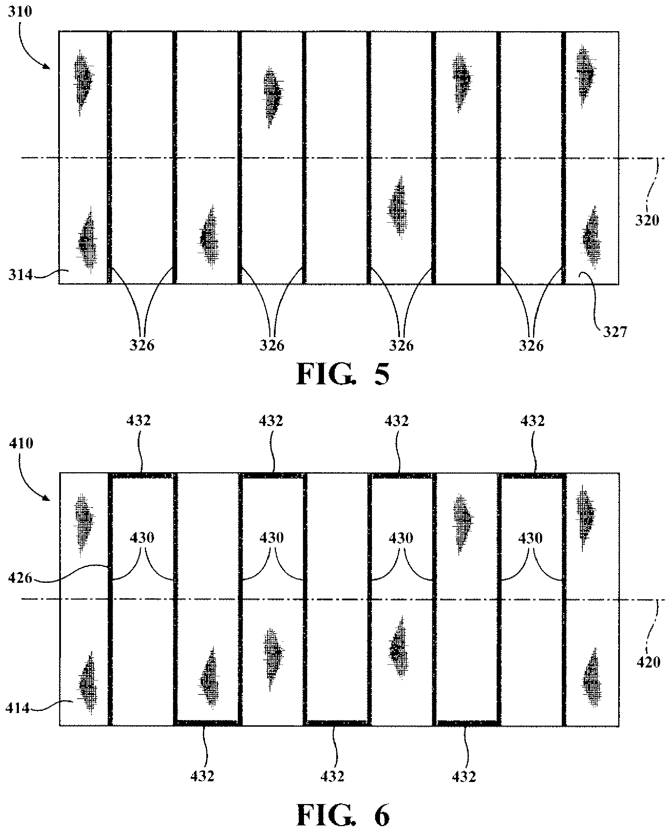

In Figure 5, a sleeve 310 having a sleeve wall 314 constructed in accordance with another embodiment of the invention is shown, wherein the wall 314 is similar to the wall 14, including discrete reinforcement ribs 326 extending transversely to a longitudinal axis 320 of the wall 314, however, rather than fusing the plurality of reinforcement ribs 326 from a second separate heat-fusible material from the first material of the wall 314, the plurality of reinforcement ribs 326 are fused from the first material of the wall 314 within the material forming an inner surface 327 of the wall 314. Accordingly, it is to be understood that the wall 314 is formed containing a heat-fusible material, and then, the reinforcement ribs 326 are fused from and within the heat-fusible material of the wall 314 itself. Accordingly, the wall 314 must be constructed, at least in part, from a heat-fusible material, such as from those heat-fusible/heat-settable polymeric materials discussed above, however, it should be recognized that non-heat-fusible materials can also be included within the material of the wall 314. In accordance with a method of constructing the wall 314, the reinforcement ribs 326 are formed via a thermal process, such as via laser, ultrasonic radiation, or otherwise.

In Figure 6, a sleeve 410 having a sleeve wall 414 constructed in accordance with another embodiment of the invention is shown, wherein the wall 414 is similar to the wall 114, including a single, continuous reinforcement rib 426 having regions 430 extending transversely to a longitudinal axis 420 of the wall 414 and having regions 432 extending parallel to the longitudinal axis 420 of the wall 414, however, as with the wall 314 discussed above, rather than fusing the reinforcement rib from a separate heat-fusible material from the wall 414, a single, continuous reinforcement rib 426 is fused in the material of the wall 414 itself on an inner surface 427 the wall 414. Otherwise, the reinforcement rib 426 can be configured as discussed above with regard to the reinforcement rib 114.

Many modifications and variations of the present invention are possible in light of the above teachings. It is, therefore, to be understood that the invention may be practiced otherwise than as specifically described, and that the scope of the invention is defined by any ultimately allowed claims.

## Claims

1. A method of constructing a wrappable protective sleeve (10) for protecting an elongate member (12) contained therein, comprising:
forming a textile wall (14) having opposite edges (16, 18) extending lengthwise along a longitudinal axis (20) between opposite ends (22, 24, 122, 124) with the opposite edges (16, 18); and
**characterised by** melting, applying and solidifying a material on said textile wall using an additive manufacturing process to form at least one reinforcement rib (26, 126, 226, 326, 426) that is fused and bonded on said textile wall (14), said at least one reinforcement rib (26, 126, 226, 326, 426) having an increased rigidity relative to said textile wall (14).

2. The method of claim 1 further including forming the textile wall (14) from a first type of material and forming the at least one reinforcement rib (26, 126, 226, 326, 426) from a second type of material, wherein the first and second types of material are different from one another.

3. The method of claim 1 further including forming the textile wall (14) from a first type of material and forming the at least one reinforcement rib (26, 126, 226, 326, 426) from a second type of material, wherein the first and second types of material are the same.

4. The method of claim 1 further including forming the at least one reinforcement rib (26, 326) as a plurality of discrete reinforcement ribs (26, 326).

5. The method of claim 1 further including forming the at least one reinforcement rib (126, 226, 426) is formed as a single reinforcement rib (126, 226, 426).

6. The method of claim 5 further including forming the reinforcement rib extending over a serpentine path between the opposite ends.

7. The method of claim 1 further including forming the wall as a nonwoven material.

8. The method of claim 1 further including forming the wall as one of a woven, knit or braided material.

9. The method of claim 1, wherein the additive manufacturing process comprises one of a fused deposition modeling process, extrusion dispensing tip process, or screen printing process.

10. A wrappable protective sleeve (10) for providing protection to an elongate member (12) contained therein, the sleeve (10) being obtained by a method according to any preceding claim and comprising:
a textile wall (14) having opposite edges (16, 18) extending lengthwise along a longitudinal axis (20) between opposite ends (22, 24, 122, 124), said edges (16, 18) being wrappable to overlap one another to form an enclosed cavity (25); and
at least one reinforcement rib (26, 126, 226, 326, 426) extending along at least a portion of said textile wall (14), said at least one reinforcement rib (26, 126, 226, 326, 426) being fused and bonded on said textile wall (14) by melting, applying and solidifying a material on said textile wall (14) using an additive manufacturing process.

11. The wrappable protective sleeve of claim 10 wherein said at least one reinforcement rib (26, 326) is formed as a plurality of discrete reinforcement ribs (26, 326).

12. The wrappable protective sleeve of claim 11 wherein said reinforcement ribs (26, 326) are heat-set to bias said opposite edges (16, 18) into overlapping relation with one another.

13. The wrappable protective sleeve of claim 10 wherein said at least one reinforcement rib (126, 226, 426) is formed as a single, continuous reinforcement rib (126, 226, 426).

14. The wrappable protective sleeve of claim 13 wherein said reinforcement rib (126, 226, 426) extends over a serpentine path between said opposite ends (122, 124).

15. The wrappable protective sleeve of claim 10 wherein said at least one reinforcement rib (26, 126, 226, 326, 426) is asymmetrical.

## Patentansprüche

1. Verfahren zur Herstellung einer wickelbaren Schutzhülle (10) zum Schutz eines darin enthaltenen langgestreckten Elements (12), umfassend:
Bilden einer Textilwand (14), die gegenüberliegende Kanten (16, 18) hat, die sich in Längsrichtung entlang einer Längsachse (20) zwischen gegenüberliegenden Enden (22, 24, 122, 124) mit den gegenüberliegenden Kanten (16, 18) erstrecken, und
**gekennzeichnet durch** Schmelzen, Auftragen und Verfestigen eines Materials an der Textilwand unter Einsatz eines zusätzlichen Fertigungsprozesses zum Bilden von mindestens einer Verstärkungsrippe (26, 126, 226, 326, 426), die an die Textilwand (14) angeschmolzen und aufgeklebt ist, wobei die mindestens eine Verstärkungsrippe (26, 126, 226, 326, 426) relativ zu Textilwand (14) eine erhöhte Steifheit hat.

2. Verfahren nach Anspruch 1, ferner umfassend das Bilden der Textilwand (14) aus einem ersten Materialtyp und das Bilden der mindestens einen Verstärkungsrippe (26, 126, 226, 326, 426) aus einem zweiten Materialtyp, wobei der erste und der zweite Materialtyp sich voneinander unterscheiden.

3. Verfahren nach Anspruch 1, ferner umfassend das Bilden der Textilwand (14) aus einem ersten Materialtyp und das Bilden der mindestens einen Verstärkungsrippe (26, 126, 226, 326, 426) aus einem zweiten Materialtyp, wobei der erste und der zweite Materialtyp die gleichen sind.

4. Verfahren nach Anspruch 1, ferner umfassend das Bilden der mindestens einen Verstärkungsrippe (26, 326) als eine Vielzahl diskreter Verstärkungsrippen (26, 326).

5. Verfahren nach Anspruch 1, ferner umfassend das Bilden der mindestens einen Verstärkungsrippe (126, 226, 426), die als einzelne Verstärkungsrippe (126, 226, 426) gebildet ist.

6. Verfahren nach Anspruch 5, ferner umfassend das Bilden der sich über einen Serpentinenpfad zwischen den gegenüberliegenden Enden erstreckenden Verstärkungsrippe.

7. Verfahren nach Anspruch 1, ferner umfassend das Bilden der Wand als ein Vliesmaterial.

8. Verfahren nach Anspruch 1, ferner umfassend das Bilden der Wand als eines von einem gewebten, gewirkten oder geflochtenen Material.

9. Verfahren nach Anspruch 1, wobei der zusätzliche Fertigungsprozess einen von einem Schmelzabscheidungsmodellierungsprozess, Extrusionsprozess mit Dosierspitze oder Siebdruckprozess umfasst.

10. Wickelbare Schutzhülle (10) zum Schutz eines darin enthaltenen langgestreckten Elements (12), wobei die Hülle (10) nach einem der vorhergehenden Ansprüche hergestellt wird und Folgendes aufweist:
einer Textilwand (14), die gegenüberliegende Kanten (16, 18) hat, die sich in Längsrichtung entlang einer Längsachse (20) zwischen gegenüberliegenden Enden (22, 24, 122, 124) erstrecken, wobei die Kanten (16, 18) wickelbar sind, um aufeinander zu überlappen, um einen eingeschlossenen Hohlraum (25) zu bilden, und
mindestens eine, entlang mindestens eines Abschnitts der Textilwand (14) erstreckende Verstärkungsrippe (26, 126, 226, 326, 426), wobei die mindestens eine Verstärkungsrippe (26, 126, 226, 326, 426) durch Schmelzen, Auftragen und Verfestigen eines Materials an der Textilwand (14) unter Einsatz eines zusätzlichen Fertigungsprozesses an die Textilwand (14) angeschmolzen und aufgeklebt ist.

11. Wickelbare Schutzhülle nach Anspruch 10, wobei die mindestens eine Verstärkungsrippe (26, 326) als eine Vielzahl diskreter Verstärkungsrippen (26, 326) gebildet ist.

12. Wickelbare Schutzhülle nach Anspruch 11, wobei die Verstärkungsrippen (26, 326) thermofixiert sind, um gegenüberliegenden Kanten (16, 18) in eine überlappende Beziehung zueinander vorzuspannen.

13. Wickelbare Schutzhülle nach Anspruch 10, wobei die mindestens eine Verstärkungsrippe (126, 226, 426) als eine einzelnen durchgehende Verstärkungsrippe (126, 226, 426) gebildet ist.

14. Wickelbare Schutzhülle nach Anspruch 13, wobei die Verstärkungsrippe (126, 226, 426) sich sich über einen Serpentinenpfad zwischen den gegenüberliegenden Enden (122, 124) erstreckt.

15. Wickelbare Schutzhülle nach Anspruch 10, wobei die mindestens eine Verstärkungsrippe (26, 126, 226, 326, 426) asymmetrisch ist.

## Revendications

1. Procédé de construction d'un manchon protecteur enveloppant (10) destiné à protégé un élément allongé (12) contenu en son sein, comprenant :
la formation d'une paroi textile (14) présentant des bords opposés (16, 18) s'étendant dans le sens de la longueur le long d'un axe longitudinal (20) entre les extrémités opposées (22, 24, 122, 124) avec les bords opposés (16, 18) ; et
**caractérisé par** la fusion, l'application et la solidification d'un matériau sur ladite paroi textile à l'aide d'un procédé de fabrication supplémentaire pour former au moins une nervure de renforcement (26, 126, 226, 326, 426) qui est fusionnée et liée sur ladite paroi textile (14), ladite au moins une nervure de renforcement (26, 126, 226, 326, 426) possédant une rigidité accrue par rapport à ladite paroi textile (14).

2. Procédé selon la revendication 1 comprenant en outre la formation de la paroi textile (14) à partir d'un premier type de matériau et la formation de ladite au moins une nervure de renforcement (26, 126, 226, 326, 426) à partir d'un second type de matériau, lesdits premier et second types de matériaux étant différents l'un de l'autre.

3. Procédé selon la revendication 1 comprenant en outre la formation de la paroi textile (14) à partir d'un premier type de matériau et la formation de ladite au moins une nervure de renforcement (26, 126, 226, 326, 426) à partir d'un second type de matériau, lesdits premier et second types de matériaux étant identiques.

4. Procédé selon la revendication 1 comprenant en outre la formation de ladite au moins une nervure de renforcement (26, 326) sous la forme d'une pluralité de nervures de renforcement individuelles (26, 326).

5. Procédé selon la revendication 1 comprenant en outre la formation de ladite au moins une nervure de renforcement (126, 226, 426) formée sous la forme d'une seule nervure de renforcement (126, 226, 426).

6. Procédé selon la revendication 5 comprenant en outre la formation de la nervure de renforcement s'étendant suivant un chemin en serpentin entre les extrémités opposées.

7. Procédé selon la revendication 1 comprenant en outre la formation de la paroi sous la forme d'un matériau non tissé.

8. Procédé selon la revendication 1 comprenant en outre la formation de la paroi sous la forme d'un matériau parmi un matériau tissé, maillé ou tressé.

9. Procédé selon la revendication 1, ledit procédé de fabrication supplémentaire comprenant un procédé parmi un procédé de modélisation par dépôt fondu, un procédé à pointe de distribution par extrusion ou un procédé de sérigraphie.

10. Manchon protecteur enveloppant (10) destiné à assurer la protection d'un élément allongé (12) contenu en son sein, le manchon (10) étant obtenu par un procédé selon l'une quelconque des revendications précédentes et comprenant :
une paroi textile (14) présentant des extrémités opposées (16, 18) s'étendant dans le sens de la longueur le long d'un axe longitudinal (20) entre les extrémités opposées (22, 24, 122, 124), lesdits bords (16, 18) pouvant être enveloppés pour se chevaucher mutuellement de manière à former une cavité fermée (25) ; et
au moins une nervure de renforcement (26, 126, 226, 326, 426) s'étendant le long d'au moins une partie de ladite paroi textile (14), ladite au moins une nervure de renforcement (26, 126, 226, 326, 426) étant fusionnée et liée à ladite paroi textile (14) par fusion, application et solidification d'un matériau sur ladite paroi textile (14) à l'aide d'un processus de fabrication supplémentaire.

11. Manchon protecteur enveloppant selon la revendication 10, ladite au moins une nervure de renforcement (26, 326) étant formée sous la forme d'une pluralité de nervures de renforcement individuelles (26, 326).

12. Manchon protecteur enveloppant selon la revendication 11, lesdites nervures de renforcement (26, 326) étant thermodurcies de façon à solliciter lesdits bords opposés (16, 18) pour les mettre en relation de chevauchement l'un avec l'autre.

13. Manchon protecteur enveloppant selon la revendication 10, ladite au moins une nervure de renforcement (126, 226, 426) étant formée sous la forme d'une seule nervure de renforcement continue (126, 226, 426).

14. Manchon protecteur enveloppant selon la revendication 13, ladite nervure de renforcement (126, 226, 426) s'étendant suivant un chemin en serpentin entre lesdites extrémités opposées (122, 124).

15. Manchon protecteur enveloppant selon la revendication 10, ladite au moins une nervure de renforcement (26, 126, 226, 326, 426) étant asymétrique.
